# EUROPÄISCHE PATENTSCHRIFT

(11) **EP 3 049 328 B1**
(45) Veröffentlichungstag und Bekanntmachung des Hinweises auf die Patenterteilung: **28.03.2018**
(21) Anmeldenummer: 14776649.7
(22) Anmeldetag: 26.09.2014
(51) Int. Cl.: B64D 11/06

(54) **BODENANBINDUNGSBAUGRUPPE SOWIE FLUGZEUGSITZ**
FLOOR ATTACHMENT ASSEMBLY AND AIRCRAFT SEAT
ENSEMBLE DE FIXATION AU PLANCHER ET SIÈGE D'AVION

(30) Priorität: 27.09.2013 DE 102013219616
(43) Veröffentlichungstag der Anmeldung: 03.08.2016
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2014/070609
(87) Internationale Veröffentlichungsnummer: WO 2015/044338

(56) Entgegenhaltungen:
- EP-A1- 1 892 185
- FR-A1- 2 920 011
- US-A1- 2011 068 226

## Beschreibung

Die Erfindung betrifft eine Bodenanbindungsbaugruppe zur mechanischen Anbindung von zwei Flugzeugsitzen an eine Bodenstruktur eines Flugzeuges, welche vier Befestigungspunkte aufweist, wobei die Bodenanbindungsbaugruppe an den vier Befestigungspunkten mit jeweils einem Befestigungselement an der Bodenstruktur befestigbar ist. Weiterhin betrifft die Erfindung einen entsprechenden Zusammenbau eines Flugzeugsitzes mit einer solchen Bodenanbindungsbaugruppe. Flugzeugsitze für Passagierkabinen werden typischerweise an der Bodenstruktur des Flugzeugs befestigt. Die Befestigung an der Bodenstruktur kann hierbei an Sitzschienen oder an einzelnen Befestigungsstellen erfolgen. Der Sitzunterbau ist typischerweise ein metallisches Gestell mit einer Fachwerkstruktur.
Für eine sichere Verwendung eines Flugzeugsitzes im Luftverkehrsbetrieb werden durch die entsprechenden Behörden verschiedene luftfahrtrechtliche Anforderungen formuliert, die die Sicherheit des Passagiers auf dem Flugzeugsitz in verschiedenen Situationen bzw. möglichen Unfallszenarien sicherstellen sollen.
Für einen Crashfall besteht die Anforderung, dass die dynamische Insassenbelastung eines auf dem Flugzeugsitz sitzenden Passagiers unter definierten Bedingungen bestimmte Grenzwerte nicht überschreitet. Hierfür ist es notwendig, dass der Flugzeugsitz eine Möglichkeit bietet, die auf den Passagier einwirkenden Kräfte durch eine Aufnahme kinetischer Energie zu begrenzen. Der Sitzunterbau der üblichen Flugzeugsitze weist daher eine metallische Struktur auf, die sich im Crashfall plastisch verformt, dementsprechend kinetische Energie absorbiert und so die auf den Passagier einwirkenden Kräfte begrenzt.

Die plastische Verformung erfolgt dabei über den ganzen Sitzunterbau verteilt. Das bedeutet, dass die mechanischen Strukturen, die die Last tragen, verformt werden und so die auf den Passagier einwirkenden Kräfte begrenzen. Die Verformung führt auch zu einer geänderten Geometrie und Kraftführung, was bei der Auslegung des Flugzeugsitzes durch entsprechende Festigkeitsreserven berücksichtigt werden muss. Dies wirkt sich nachteilig auf das Gewicht des Flugzeugsitzes aus.

Die Deformation führt im translatorischen Crashfall unter anderem zu einer Rotationsbewegung eines Großteils des Sitzes um einen virtuellen Drehpunkt in der Nähe des Kabinenbodens. Dies führt aufgrund der Lage des sich ergebenden virtuellen Drehpunkts zu einer deutlichen translatorischen Verschiebung im oberen Bereich des Sitzes, die zusätzlich zur translatorischen Verschiebung, die zur Energieaufnahme benötigt wird, auftritt. Dies führt somit zu einer großen Bewegungsenveloppe in einem Crashfall für den Flugzeugsitz und folglich auch für den Sitzenden, so dass die Bewegungsenveloppe als Bewegungsraum von weiteren Einbauten freigehalten werden muss.

Eine Verwendung einer einfachen Versteifung der Struktur für den Sitzunterbau, um eine Rotation bei translatorischen Crashfällen zu reduzieren, steht der sicherheitstechnischen Anforderung zur Kraftbegrenzung für den Passagier entgegen.

Insbesondere gehört zu den behördlichen Anforderungen für Flugzeugsitze, dass in einem Crashfall eine Vordeformation des Flugzeugbodens anzunehmen ist, die vom Sitzunterbau aufgenommen bzw. ertragen werden muss. Die Sitzunterbauten müssen daher eine mechanische Nachgiebigkeit gerade im unteren Bereich aufweisen, um den Auslenkungen in der Flugzeugbodenstruktur folgen zu können. Dies steht im Widerspruch zu einer geringen Rotationsbewegung des Flugzeugsitzes und zur gewünschten kleinen Bewegungsenveloppe. Sitzunterbauten mit steifen Strukturen, die aber nur eine geringe Verformung zulassen, sind daher mit der im Stand der Technik bekannten Lösung nicht realisierbar.

Weiterhin erfolgt durch die Vordeformation der Bodenstruktur eine Verformung des Sitzunterbaus mit großen Dehnungen und einer veränderten Geometrie, was zu einer Schwächung des Sitzunterbaus führt, wobei der eigentliche Crashfall mit hohen dynamischen Lasten erst anschließend auftritt.

Zudem ist die mögliche Krafteinleitung an den Befestigungspunkten, z.B. auf einer Sitzschiene, regelmäßig begrenzt. Daher sind lokale Überlastungen an einzelnen Stellen bzw. Befestigungspunkten zu vermeiden. Dies ist insbesondere bei Doppelsitzen oder Sitzgruppen zu beachten, da hier die entsprechende erhöhte Anzahl Personen die auftretenden Lasten bei gleichgehaltener Anzahl Lasteinleitungsstellen bzw. Befestigungspunkten vervielfacht. Derartige Belastungsgrenzen der Befestigungspunkte sind beispielsweise bei VIP-Umbauten von Flugzeugkabinen von Bedeutung, da die Sitzschienen eines Flugzeugs in der Regel für eine typische Mehrklassenbestuhlung ausgelegt sind. Der Einbau von Doppelsitzen oder Sitzgruppen mit mehreren direkt nebeneinander angeordneten Sitzen ist daher nicht an jeder Stelle der Kabine vorgesehen. Die mechanischen Reserven von Sitzschienen können daher beispielsweise im vorderen Kabinenbereich eines Flugzeugs begrenzt sein. Weiterhin ist es aufgrund der üblichen Abstände von Sitzschienen bzw. den vorliegenden Befestigungspunkten in einer Kabine eines Flugzeugs vorteilhaft, wenn zwei Flugzeugsitze eine gemeinsame Anbindung an die Bodenstruktur des Flugzeugs aufweisen.
Die Aufgabe der Erfindung ist es, eine Bodenanbindungsbaugruppe anzugeben, die die Verwendung eines steifen Sitzunterbaus für zwei Flugzeugsitze ermöglicht.

Die Aufgabe wird ausgehend von dem zum Beispiel aus der vorveröffentlichten US 2011/069 226 A1 bekannten Oberbegriff des Anspruchs 1 mit dessen kennzeichnenden Merkmalen gelöst. Es wird eine Bodenanbindungsbaugruppe zur mechanischen Anbindung von zwei Flugzeugsitzen an eine Bodenstruktur eines Flugzeuges vorgeschlagen, welche vier Befestigungspunkte aufweist, wobei die Bodenanbindungsbaugruppe an den vier Befestigungspunkten mit jeweils einem Befestigungselement an der Bodenstruktur befestigbar ist. Erfindungsgemäß umfasst die Bodenanbindungsbaugruppe zwei Adapterplatten, wobei die zwei Adapterplatten über ein Verbindungselement miteinander verbunden sind. Die mechanische Verbindung zwischen mindestens einer der Adapterplatten und mindestens einem der Befestigungselemente ist in mindestens einer Achse verschiebbar und/oder verdrehbar.
Die Adapterplatten und deren Lagerung zu den Befestigungselementen, welche die mechanische Anbindung zu den ortsfesten Befestigungspunkten der Bodenstruktur aufweisen, führen dazu, dass eine Vordeformation der Bodenstruktur des Flugzeugs im Wesentlichen keine Kräfte auf die Adapterplatten überträgt. Durch eine Verschiebbarkeit bzw. Verdrehbarkeit eines Befestigungselements zu einer Adapterplatte in mindestens einer Achse kann erreicht werden, dass auf die Stabilität der Adapterplatten bezogen nur geringfügige Kräfte an dieser Position in dieser Achse in die Adapterplatten eingeleitet werden, wobei in den anderen Achsen mechanische Kräfte übertragen werden können. Die Bodenanbindungsbaugruppe kann daher insgesamt Kräfte von der Bodenstruktur des Flugzeugs in alle Richtungen über die Adapterplatte zu weiteren Strukturen eines Flugzeugsitzes übertragen, nicht jedoch in alle Richtungen Kräfte von den einzelnen Befestigungselementen aus.

Daher sind die Adapterplatten der Bodenanbindungsbaugruppe bei einer Vordeformation der Bodenstruktur des Flugzeugs frei von Deformationen, wodurch an einer Adapterplatte angebrachte Strukturen eines Flugzeugsitzes nicht von einer Vordeformation der Bodenstruktur des Flugzeugs betroffen sind. Dies kann es ermöglichen, die weiteren Strukturen steifer und/oder leichter auszuführen, was insgesamt einen leichteren Flugzeugsitz mit einem steifen Sitzunterbau ermöglicht. Es ermöglicht weiterhin kraftbegrenzende Elemente vergleichsweise hoch im Flugzeugsitz anzuordnen, wodurch eine unerwünschte Rotation des Flugzeugsitzes um einen tiefliegenden Drehpunkt im Crashfall vermieden werden kann.

Die entsprechende Anordnung ermöglicht die an den Befestigungspunkten auf die Bodenstruktur einwirkenden Lasten so gering wie möglich zu halten. Die Bodenstruktur wird zudem durch die entsprechende Ausführung bei einer Vordeformation deutlich weniger belastet oder vorgeschädigt, so dass sich insgesamt eine sicherere Sitzanbindung von zwei Flugzeugsitzen an die Bodenstruktur ergeben kann.

Vorzugsweise ist durch das Verbindungselement eine Verschiebbarkeit der beiden Adapterplatten relativ zu einander parallel zu einer Querachse von mindestens 10 mm bewirkbar.
Die Verschiebbarkeit zwischen der Adapterplatte und mindestens einem Befestigungselement ist vorzugsweise begrenzt. Die Begrenzung der Verschiebbarkeit definiert den Toleranzbereich, in dem eine Vordeformation der Bodenstruktur durch die Bodenanbindungsbaugruppe aufgenommen werden kann.
Die Verschiebbarkeit der Adapterplatten zueinander ergibt die Möglichkeit, dass eine Vorverformung der Bodenstruktur, beispielsweise der Drehung einer Sitzschiene oder des Befestigungspunkts allgemein, eine entsprechende geringfügige Bewegung der Adapterplatten und der damit verbundenen Flugzeugsitzen zueinander ermöglicht, ohne dass hierdurch große Lasten in die Adapterplatte selbst und damit in den Sitzunterbau eingeleitet werden. Die Bewegung der Adapterplatten kann hierbei entweder aufeinander zu oder voneinander weg erfolgen. Nach einer entsprechenden Vordeformation der Bodenstruktur kann sich somit der Sitzabstand in gewissen Grenzen verändert haben. Die Adapterplatten, die Sitzunterbauten und die Flugzeugsitze selbst sind in diesem Zustand aber noch unbeeinflusst bzw. ohne Vordeformation, so dass sie in einem folgenden Crashfall mit einer intakten und unverformten Struktur zum Übertragen und Begrenzen der auf einen Sitzenden einwirkenden Kräfte zur Verfügung stehen.
Vorzugsweise sind die beiden Adapterplatten durch das Verbindungselement gegeneinander um die Querachse oder eine Parallele zu der Querachse momentenfrei verbunden.

Die momentenfreie Verbindung der beiden Adapterplatten durch das Verbindungselement um eine entsprechende Querachse ermöglicht eine Rotation der beiden Adapterplatten gegeneinander, so dass die Adapterplatten und die gesamte Bodenanbindungsbaugruppe bei einer Vordeformation der Bodenstruktur weitgehend kräftefrei bleiben, wodurch die Bodenanbindungsbaugruppe für den Crashfall mechanisch unbeschädigt für eine Lastaufnahme zur Verfügung steht. Eine Schwächung der mechanischen Festigkeit durch eine Vordeformation der Bodenstruktur kann auf diese Weise verhindert werden.

In bevorzugten Ausführungsformen sind auf zwei parallelen Achsen zu einer Längsachse jeweils ein vorderes Befestigungselement und ein hinteres Befestigungselement angeordnet, wobei jeweils die vorderen Befestigungselemente auf einer parallelen Achse zu einer Querachse und/oder jeweils die hinteren Befestigungselemente auf einer weiteren parallelen Achse zu einer Querachse angeordnet sind, wobei die Längsachse und die Querachse rechtwinklig zueinander stehen.

Die Längsachse ist vorzugsweise parallel zu der Flugrichtung eines Flugzeugs ausgerichtet, wobei die rechtwinklig hierzu liegende Querachse mit der Längsachse eine Ebene aufspannt, welche vorzugsweise in der Ebene des Kabinenbodens bzw. der Bodenstruktur oder parallel hierzu liegt. Eine derartige Ebene kann auch als Bodenebene bezeichnet werden.

Die beschriebene Art der Lagerung eignet sich gut für eine nahezu kräftefreie Lagerung der Adapterplatten bei einer Vorverformung des Kabinenbodens. Insbesondere ist diese Art der Lagerung auch für die Verwendung auf zwei parallelen Sitzschienen an der Bodenstruktur des Flugzeugs vorteilhaft geeignet. Weiterhin ist vorzugsweise die Lagerung zur Längsachse, welche in üblichen Ausführungsformen im Wesentlichen parallel zu der Haupterstreckungsrichtung des Flugzeugs verläuft, symmetrisch.

Vorzugsweise sind die vorderen Befestigungselemente parallel zu der Längsachse mindestens jeweils 20 mm in beide Richtungen verschiebbar, parallel zu der Querachse mindestens jeweils 3 mm in beide Richtungen verschiebbar und parallel zu einer Hochachse fest, wobei die hinteren Befestigungselemente parallel zu der Längsachse fest, parallel zu der Querachse fest und parallel zu der Hochachse fest sind.

Mit einer derartigen Konfiguration der Freiheitsgrade kann ein Sitzunterbau eines Flugzeugsitzes bei einer Vordeformation der Bodenstruktur kräftefrei gehalten werden, so dass ein steifer Sitzunterbau verwendet werden kann. Insbesondere eignet sich eine solche Konfiguration, um einen hohen Toleranzbereich in Bezug zu der Lage eines möglichen Drehpunkts zu erhalten, um den sich eine Sitzschiene bei einer Vorverformung der Bodenstruktur drehen kann.

Jede der beiden Adapterplatten weist zwei Befestigungselemente auf, welche die mechanische Verbindung zur Bodenstruktur, beispielsweise eine Sitzschiene, herstellen. Eine Festlegung einer Adapterplatte erfolgt neben den beiden Befestigungselementen jeweils durch die andere Adapterplatte, so dass sich die Adapterplatten im Bereich des Verbindungselements gegenseitig stützen. Das Verbindungselement liegt vorzugsweise zwischen den beiden hinteren Befestigungselementen. Weiterhin vorzugsweise liegt das Verbindungselement im Bereich einer gedachten Verbindungslinie zwischen den beiden hinteren Befestigungselementen.

In vorteilhaften Ausführungsformen weist mindestens eine Verbindung von der Adapterplatte zu einem Befestigungselement und/oder das Verbindungselement zwischen den Adapterplatten einen Verformungsbereich auf, der dafür vorgesehen ist, in mindestens einer Richtung eine Verschiebbarkeit durch eine plastische Deformation zu ermöglichen.

Die plastische Verformung des Verformungsbereichs kann dabei in einem Strukturteil zwischen einem Befestigungselement und der Adapterplatte erfolgen. Weiterhin kann die plastische Verformung zwischen den Adapterplatten durch einen Verformungsbereich des Verbindungselements erreicht werden. Die plastische Verformbarkeit in mindestens einer Richtung erlaubt vorzugsweise die Übertragung von Kräften in die anderen Richtungen. Ein Verformungsbereich ist vorteilhaft, da dieser die notwendige Beweglichkeit in der entsprechenden Richtung zwischen Befestigungselement und Adapterplatte erst beim Auftreten entsprechender Kräfte ermöglicht und daher bei der Montage einfach zu handhaben ist. Die entsprechenden Kräfte sind vorzugsweise dabei so gewählt, dass eine übliche Nutzung im Flugbetrieb keine plastische Verformung des Verformungsbereichs auslöst, wohingegen die plastische Verformung des Verformungsbereichs weit vor einer möglichen plastischen Deformation oder Schädigung der Adapterplatten erfolgt. Weiterhin kann auf diese Weise die entsprechende Beweglichkeit bzw. Verschiebbarkeit mit einem geringen Strukturgewicht sowie kostengünstig erreicht werden. Eine Richtung der plastischen Deformation kann auch eine Rotation umfassen.

Eine solche Verbindung kann auch als Fließgelenk bezeichnet werden, wobei das Fließen auf die vorgesehene mechanische Verformbarkeit oberhalb einer Fließgrenze des Materials im Verformungsbereich der Verbindung bezogen ist.

Der entsprechende Verformungsbereich kann weiterhin bei einem Crashfall Schocklasten durch Energieaufnahme reduzieren, was vorteilhaft für die Insassen- und Sitzstrukturbelastung sein kann.

Vorzugsweise weist die mechanische Verbindung zwischen einer Adapterplatte und mindestens einem Befestigungselement oder das Verbindungselement zwischen den Adapterplatten ein Elastomerlager und/oder eine Lagerung mit Gleitsitz auf.

Ein Elastomerlager ermöglicht eine momentenfreie Lagerung und kann zusätzlich im Normalbetrieb die Übertragung von Vibrationen und Körperschall zwischen der Bodenstruktur und der Bodenanbindungsbaugruppe reduzieren, was den Komfort für den Passagier erhöhen kann.

Die mechanische Verbindung zwischen der Adapterplatte und mindestens einem Befestigungselement weist vorteilhafterweise einen Gleitsitz auf. Die mechanische Lagerung mit einem Gleitsitz ist eine vorteilhafte Ausführungsform, um eine Verschiebbarkeit in der Lagerung zumindest in einer Richtung zu ermöglichen. Kräfte senkrecht zur Verschiebbarkeit können durch eine Lagerung mit einem Gleitsitz übertragen werden. Weiterhin besteht die Möglichkeit der gleichzeitigen momentenfreien Lagerung in einer Drehachse.

Die Adapterplatten der Bodenanbindungsbaugruppe sind vorzugsweise bis zu einer Auslenkung der Befestigungspunkte von 200 mm aus ihrer Ausgangslage deformationsfrei lagerbar. Eine derartige deformationsfreie Lagerung definiert eine Toleranzzone und ist eine Beschränkung der möglichen Vordeformation der Bodenstruktur. In diesem Bereich erfahren die Adapterplatten vorzugsweise keine Vorschädigung, so dass die Adapterplatten und darauf befestigte Strukturen eine entsprechende Vordeformation der Bodenstruktur deformationsfrei, beispielsweise ohne Bruch und ohne plastische Verformung, ertragen.

Vorzugsweise sind jeweils zwei der Befestigungselemente an zwei Befestigungspunkten auf einer Sitzschiene befestigbar, wobei die Bodenanbindungsbaugruppe derart lagerbar ist, dass eine Drehung einer Sitzschiene um einen innerhalb der Sitzschiene und im Umkreis von 1 m um den geometrischen Mittelpunkt der Bodenanbindungsbaugruppe liegenden Drehpunkt um mindestens 10° keine irreversible Deformation der Adapterplatten hervorruft.

Eine derartige Lagerung ist für die Verwendung eines steifen Sitzunterbaus gut geeignet, da weitgehend keine Vordeformation der Bodenstruktur selbst durch den Sitzunterbau aufgenommen werden muss, was insbesondere die Verwendung von leichten Faserverbundmaterialien ermöglicht, welche nach einer Deformation mit großen Dehnungen einen wesentlichen Teil ihrer Tragkraft verlieren können.

In einer bevorzugten Ausführungsform ist an mindestens einer der Adapterplatten ein Anschlusspunkt für einen Sitzunterbau vorgesehen. Der Anschlusspunkt ermöglicht eine mechanische Verbindung zum Sitzunterbau, vorzugsweise mit einer lösbaren Verbindung mit Mitteln, wie beispielsweise Schrauben, Bolzen und/oder Gewindebuchsen.

Weiterhin ist in einer vorteilhaften Ausführungsform auf der Bodenanbindungsbaugruppe ein Sitzunterbau translatorisch und/oder rotatorisch in einer Bodenebene bewegbar. Die translatorische Beweglichkeit eines Sitzunterbaus auf der Bodenanbindungsbaugruppe ist für eine Nutzung eines Flugzeugsitzes vorteilhaft, um den Flugzeugsitz in der Kabine bei Bedarf beispielsweise an einen Tisch heran oder weg bewegen zu können. Eine rotatorische Beweglichkeit des Sitzunterbaus auf der Bodenanbindungsbaugruppe erlaubt eine Veränderung der Sitzausrichtung, was die Flexibilität der Nutzung des Flugzeugsitzes erhöhen kann.

In einer alternativen vorteilhaften Ausführungsform ist die Adapterplatte zusammen mit einem Sitzunterbau ein Integralbauteil. Die vorgeschlagene Ausführungsform ermöglicht eine leichte und steife Anbindung eines Sitzunterbaus an die Bodenanbindungsbaugruppe. Weiterhin wird die Teilezahl durch die Integralbauweise reduziert und eine bessere Leitung von Kräften ermöglicht.

Die Adapterplatte ist vorzugsweise ein Faserverbundbauteil. Die Ausführungsform der Adapterplatte als Faserverbundbauteil mit beispielsweise einem Anteil von Kohlenstofffasern am Strukturgewicht ermöglicht eine hohe Steifigkeit bei geringem Gewicht, wobei aufgrund der erfindungsgemäßen Bodenanbindungsbaugruppe die Adapterplatte keinen Deformationen aus der Bodenstruktur folgen muss, was die Anwendbarkeit von Faserverbundstrukturen verbessert.

Weiterhin weist die Adapterplatte vorzugsweise eine Sandwichstruktur auf. Dies ermöglicht eine sehr leichte und vor allem biegesteife Adapterplatte.

In möglichen vorteilhaften Ausführungsformen weisen alle Befestigungselemente eine im Wesentlichen momentenfreie mechanische Verbindung zu der Adapterplatte auf. Dies verbessert die Entkopplung der Vordeformation der Bodenstruktur von der Adapterplatte, so dass die Adapterplatte alle mechanischen Lasten, die im regulären Betrieb und im Crashfall zwischen Flugzeugsitz und Bodenstruktur auftreten, übertragen kann, jedoch keine Verformung bei einer entsprechenden Vordeformation der Bodenstruktur erfährt.

In einer vorteilhaften Ausführungsform weist die mechanische Verbindung zwischen der Adapterplatte und mindestens einem Befestigungselement eine Kugelkopflagerung auf. Eine Kugelkopflagerung ist eine vorteilhafte Ausführungsform, um eine momentenfreie Lagerung der Bodenanbindungsbaugruppe zu erreichen.

Weiterhin wird die Aufgabe der Erfindung ausgehend vom Oberbegriff des letzten Anspruchs mit dessen kennzeichnenden Merkmalen gelöst. Es wird ein Flugzeugsitz vorgeschlagen, wobei eine entsprechende Bodenanbindungsbaugruppe vorgesehen ist. Ein Flugzeugsitz kann somit neben einem weiteren Flugzeugsitz vorteilhaft mittels der Bodenanbindungsbaugruppe an eine Bodenstruktur eines Flugzeugs angebunden werden. Dies kann auch für die Montage und Demontage des Flugzeugsitzes vorteilhaft sein.

Die Erfindung wird im Folgenden anhand bevorzugter Ausführungsformen unter Bezugnahme auf die beigefügten Figuren erläutert. Dabei zeigt:
- Fig. 1: eine Bodenanbindungsbaugruppe an zwei Sitzschienen;
- Fig. 2: eine schematische Darstellung einer Bodenanbindungsbaugruppe;
- Fig. 3: eine schematische Darstellung einer Bodenanbindungsbaugruppe in einer Viereranordnung;
- Fig. 4: einen Flugzeugsitz aus dem Stand der Technik; und
- Fig. 5: einen Flugzeugsitz mit Bodenanbindungsbaugruppe und steifem Sitzunterbau.

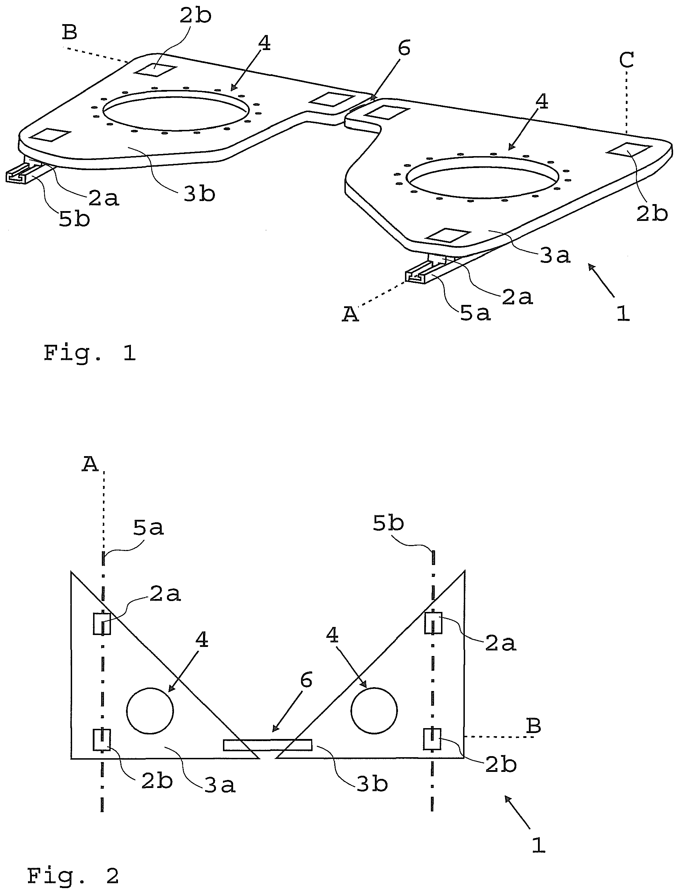

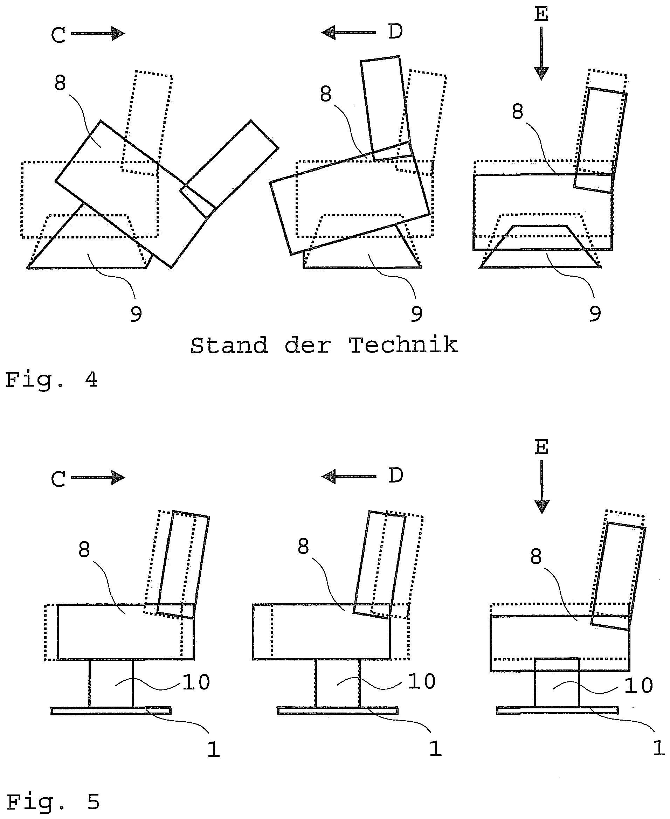

Fig. 1 zeigt ein vorteilhaftes Ausführungsbeispiel einer Bodenanbindungsbaugruppe 1 mit zwei Adapterplatten 3a,3b. Die beiden Adapterplatten 3a,3b weisen jeweils Anschlusspunkte 4 für einen Sitzunterbau 10, s. Fig. 5, auf. Der Sitzunterbau 10 kann ein Podest bilden, auf dem weitere Baugruppen eines Flugzeugsitzes 8, s. Fig. 5, angeordnet werden können.

Die Bodenanbindungsbaugruppe 1 ist mit Befestigungselementen 2a,2b an der Bodenstruktur eines Flugzeugs befestigbar. Die Bodenstruktur des Flugzeuges ist die mechanische Struktur im Flugzeug zur Aufnahme der mechanischen Lasten, die auf den Kabinenboden einwirken. Die Bodenstruktur weist in diesem Ausführungsbeispiel zwei Sitzschienen 5a,5b auf, die jeweils eine Mehrzahl von möglichen Befestigungspunkten entlang ihrer Hauptachsen aufweisen. Die Hauptachsen der Sitzschienen 5a,5b liegen in diesem Ausführungsbeispiel parallel zu einer Längsachse A.

Die vier Befestigungselemente 2a,2b der Bodenanbindungsbaugruppe 1 sind ortsfest an vier Befestigungspunkten auf den Sitzschienen 5a,5b angeordnet, wobei jeweils zwei der Befestigungselemente 2a,2b an einer der Sitzschienen 5a oder 5b angeordnet sind. Die Befestigungselemente 2a,2b können beispielsweise an einem Befestigungspunkt mit der Sitzschiene 5a,5b verschraubt, verspannt und/oder in anderer Weise mechanisch verbunden sein, um eine Kraftübertragung zwischen der Bodenstruktur über die Sitzschiene 5a,5b und der Bodenanbindungsbaugruppe 1 über das Befestigungselement 2a,2b zu ermöglichen.

Die Befestigungselemente 2a,2b können hierbei eine unverschiebbare Verbindung mit der Bodenstruktur darstellen. Die vorderen Befestigungselemente 2a sind in dieser Figur die einzig sichtbaren Befestigungselemente 2a. Die hinteren Befestigungselemente 2b werden durch Teile der Adapterplatten 3a,3b verdeckt, so dass die hinteren Befestigungselemente 2b in der Fig.1 nur entsprechend ihrer Position angedeutet sind.

Die Adapterplatten 3a,3b sind im Wesentlichen flächige Gebilde, welche größtenteils zwischen den Befestigungselementen 2a,2b angeordnet sind. Die Adapterplatten 3a,3b sind hierbei möglichst formstabil und steif ausgeführt, um eine Übertragung von mechanischen, insbesondere dynamischen, Lasten zwischen den Anschlusspunkten 4 und der Bodenstruktur weitgehend ohne Verformung und Deformation zu ermöglichen. Die Adapterplatten 3a,3b können in einem bevorzugten Ausführungsbeispiel eine kohlenstofffaserverstärkte Struktur aufweisen. Weiterhin können die Adapterplatten 3a,3b auch unter Verwendung von z.B. mechanischen Schäumen und/oder Honigwabenstrukturen eine Sandwichbauweise aufweisen. Dies soll insgesamt für die Adapterplatten 3a,3b eine sehr steife und gleichzeitig leichte Struktur ermöglichen. Die Anschlusspunkte 4 für einen Sitzunterbau 10 können metallische Einsätze sein, die eine Verschraubung und/oder Verstiftung ermöglichen und in die Adapterplatten 3a,3b integriert sein können.

Die Adapterplatten 3a,3b können im Wesentlichen parallel zur Bodenebene der Flugzeugkabine ausgerichtet sein. In vorteilhaften Ausführungsformen sind die Adapterplatten 3a,3b über der Bodenebene der Flugzeugkabine, die als Trittfläche für Passagiere dient, angeordnet. In möglichen alternativen Ausführungsformen können die Adapterplatten 3a,3b so angeordnet sein, dass die Bodenebene innerhalb oder an den Grenzen der Adapterplatten 3a,3b liegt. Weiterhin alternativ können die Adapterplatten 3a,3b unterhalb der Bodenebene angeordnet sein. In einem möglichen Ausführungsbeispiel können in den Adapterplatten 3a,3b verschiedene Aussparungen und/oder Ausschnitte vorhanden sein, wodurch eine gewichtsreduzierte Adapterplatte 3a,3b ermöglicht wird.

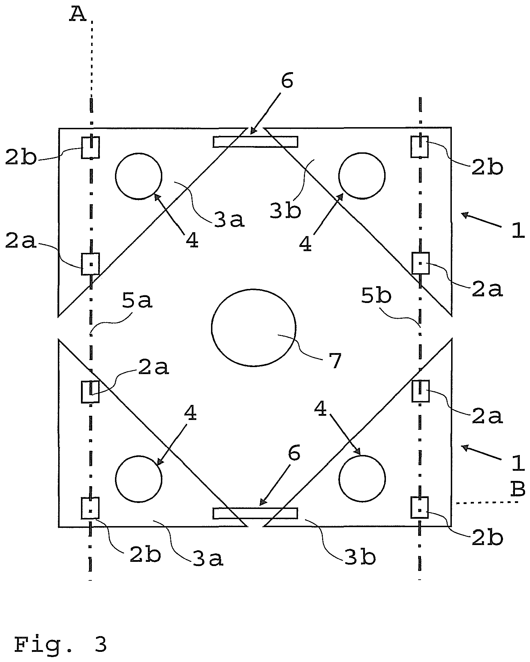

Die einzelnen Adapterplatten 3a,3b sind dafür eingerichtet, mittels zwei Befestigungselementen 2a,2b an zwei Befestigungspunkten mit den Sitzschienen 5a,5b verbunden zu werden. In einem bevorzugten Ausführungsbeispiel ist die mechanische Verbindung zwischen wenigstens einem Befestigungselement 2a,2b und einer Adapterplatte 3a,3b verschiebbar. Verschiebbar bedeutet in diesem Zusammenhang, dass die mechanische Verbindung in der Achse der Verschiebbarkeit keine wesentlichen Kräfte überträgt und eine Relativbewegung zwischen Befestigungselement 2a,2b und Adapterplatte 3a,3b in dieser Achse möglich ist. Eine Verschiebbarkeit in einer Achse bedeutet hierbei noch keine Verschiebbarkeit in die Richtungen der anderen Achsen, so dass in diese Richtungen weiterhin Kräfte übertragen werden können.
Die Verschiebbarkeit der mechanischen Verbindung zwischen Befestigungselement 2a,2b und einer Adapterplatte 3a,3b dient vorzugsweise nicht zu einer translatorischen Bewegung des Flugzeugsitzes 8 gegenüber der Bodenstruktur, sondern für die beschriebene weitgehend kräftefreie Relativbewegung innerhalb der Bodenanbindungsbaugruppe 1 im Fall einer Verformung der Bodenstruktur. Eine translatorische Bewegung, um beispielsweise mit dem Flugzeugsitz 8 näher an einen Tisch 7, s. Fig. 3, heranrücken zu können, kann beispielsweise durch eine Relativbewegung zwischen der Bodenanbindungsbaugruppe 1 und dem Sitzunterbau 10 und/oder durch eine Relativbewegung zwischen dem Sitzunterbau 10 und einer Sitzfläche realisiert werden.

In einem weiteren möglichen Ausführungsbeispiel wird die mechanische Verbindung zwischen einem oder mehreren Befestigungselementen 2a,2b und einer Adapterplatte 3a,3b durch Elastomerlager gebildet, wodurch eine im Wesentlichen momentenfreie Lagerung an dieser Stelle realisiert wird. Elastomerlager weisen eine Verbindung von zwei gegeneinander beweglichen Teilen auf, wobei die relative Beweglichkeit durch ein zwischen beiden Teilen angeordnetes elastisches Material erzielt wird.

Weiterhin kann die mechanische Verbindung eine konstruktiv vorgesehene plastische Verformbarkeit aufweisen, wodurch mit entsprechender Krafteinwirkung in einer Richtung eine Verschiebbarkeit in dieser Richtung erreicht werden kann, wobei weiterhin eine Kraft- und/oder Momentenübertragung in andere Richtungen möglich ist. Die plastische Verformung tritt dabei vorteilhafterweise bereits ein, bevor die Kraft- und/oder Momenteneinwirkung eine Deformation bzw. Verformung der Adapterplatten 3a,3b hervorruft.

In der Fig. 2 ist eine schematische Darstellung der Bodenanbindungsbaugruppe 1 in einer Aufsicht dargestellt. Die Befestigungselemente 2a,2b der Adapterplatte 3a, welche sich auf zwei Befestigungspunkten der Sitzschiene 5a befinden, ermöglichen bestimmte Kraft- und/oder Momentenübertragungen zwischen Sitzschiene 5a und Adapterplatte 3a. Das vordere Befestigungselement 2a und das hintere Befestigungselement 2b sind beide auf der Sitzschiene 5a angeordnet, so dass diese auf einer gemeinsamen Achse angeordnet sind, die parallel oder in der Längsachse A verläuft. Die Längsachse A entspricht in der Regel der Haupterstreckungsrichtung der Flugzeugkabine bzw. der Flugrichtung.

Die Verschiebbarkeit kann insbesondere bei dem vorderen Befestigungselement 2a und parallel zu der Längsachse A durch eine bewegliche bzw. verschiebbare mechanische Verbindung zwischen dem vorderen Befestigungselement 2a und der Adapterplatte 3a oder durch eine Verschiebbarkeit des vorderen Befestigungselements 2a in der Sitzschiene 5a erreicht werden.

Das vordere Befestigungselement 2a ist vorzugsweise in Sitzrichtung vorn an der Bodenanbindungsbaugruppe 1 angeordnet. Parallel zu der Querachse B weist das vordere Befestigungselement 2a vorzugsweise eine verschiebbare Verbindung zu der Adapterplatte 3a auf. Weiterhin ist vorzugsweise keine Verschiebbarkeit in Richtung einer Hochachse C vorgesehen, welche vorzugsweise senkrecht zu der Längsachse A und der Querachse B steht. In bevorzugten Ausführungsformen weist das vordere Befestigungselement 2a keine rotatorischen Freiheitsgrade auf.

Ein hinteres Befestigungselement 2b der Adapterplatte 3a ist in diesem vorteilhaften Ausführungsbeispiel auf derselben Sitzschiene 5a befestigt. Das hintere Befestigungselement 2b weist in vorteilhaften Ausführungsbeispielen keine rotatorischen und keine translatorischen Freiheitsgrade gegenüber der Sitzschiene 5a und gegenüber der Adapterplatte 3a auf.

Die andere Adapterplatte 3b der Bodenanbindungsbaugruppe 1 ist vorzugsweise symmetrisch zur Adapterplatte 3a aufgebaut. Die beiden Adapterplatten 3a,3b sind mittels eines Verbindungselements 6 mechanisch miteinander verbunden. Das Verbindungselement 6 kann beispielsweise einen biegesteifen Stab aufweisen, welcher in entsprechenden Öffnungen der Adapterplatten 3a,3b angeordnet ist. Das Verbindungselement 6 ermöglicht in vorteilhaften Ausführungsformen eine Verschiebbarkeit der Adapterplatten 3a,3b gegeneinander um mindestens 20 mm aus einer Normallage in der Querachse B.

Zudem ermöglicht das Verbindungselement 6 vorzugsweise eine momentenfreie Lagerung um die Querachse B der Adapterplatten 3a,3b, so dass eine Verdrehung der Adapterplatte 3a gegen die Adapterplatte 3b bei einer entsprechenden Vordeformation der Bodenstruktur bzw. Drehung der Sitzschiene 5a,5b um die Querachse B möglich ist.

Eine momentenfreie Lagerung der Adapterplatten 3a,3b gegeneinander durch das Verbindungselement 6 um die Querachse B oder eine Parallele zu der Querachse B ermöglicht die Adapterplatten 3a, 3b bei einer Deformation bzw. Vordeformation der Bodenstruktur kräftefrei zu halten, so dass in einem folgenden Crashfall die gesamte mechanische Festigkeit der Bodenanbindungsgruppe 1 zur Aufnahme der Crashlasten zur Verfügung steht.

Die momentenfreie Lagerung erfolgt durch das Verbindungselement 6, welches vorzugsweise eine Verschiebbarkeit der Adapterplatten 3a,3b relativ zu einander Parallelen zu einer Querachse und eine Verdrehbarkeit um die Achse der Verschiebbarkeit ermöglicht.

Der momentenfreien Lagerung des Verbindungselements 6 um eine Achse steht es nicht entgegen, dass weitere Mittel vorhanden sein können, welche eine momentenfreie Lagerung der beiden Adapterplatten 3a,3b gegeneinander insoweit blockieren, dass gewöhnliche Handhabungskräfte bzw. -momente, z.B. bei der Montage, aufgenommen werden können. In vorteilhaften Ausführungsbeispielen ist die Blockierung der momentenfreien Lagerung nur bis zum Erreichen eines höheren Lastniveaus, welches aus einer Vordeformation der Bodenstruktur oder eines Crashfalls resultieren kann, gegeben. Bei Überschreitung eines entsprechenden Lastniveaus wird eine derartige Blockierung durch die weiteren Mittel dauerhaft freigegeben. Dies kann beispielsweise durch einen Scherbolzen erfolgen. Eine derartige Blockierung der momentenfreien Lagerung der beiden Adapterplatten 3a,3b gegeneinander kann eine vereinfachte Montage ermöglichen und Klappergeräusch durch Toleranzen in der momentenfreien Lagerung verhindern.

In analoger Weise kann in weiteren Ausführungsbeispielen die Verschiebbarkeit der beiden Adapterplatten 3a,3b relativ zu einander, parallel zu einer Querachse durch weitere Mittel, wie beispielsweise einem Scherbolzen, bei normalen Handhabungs- und Betriebskräften, welche nicht einer Vordeformation der Bodenstruktur oder einem Crash entsprechen, blockiert sein, um beispielweise Klappergeräusche durch die Verschiebbarkeit in der Lagerung und entsprechende Toleranzen durch das Verbindungselement 6 zu verhindern.

Eine Drehung einer Sitzschiene 5a,5b um die Längsachse A oder um eine in der Nähe befindliche Drehachse kann bei einer Vorverformung vorzugsweise durch eine translatorische Ausgleichsbewegung der beiden Adapterplatten 3a,3b zueinander ausgeglichen werden.

In Fig. 3 ist eine Anordnung von zwei Bodenanbindungsgruppen 1 auf zwei Sitzschienen 5a,5b schematisch in einer Aufsicht dargestellt. Beide Bodenanbindungsbaugruppen 1 weisen jeweils zwei Adapterplatten 3a,3a auf, die jeweils Anschlusspunkte 4 für Flugzeugsitz 8 aufweisen. Es können daher in diesem Ausführungsbeispiel vier Flugzeugsitze 8 an den beiden Sitzschienen 5a,5b angeordnet sein.

Die in der Fig. 3 oben dargestellte Bodenanbindungsbaugruppe 1 ist in der Längsachse A entgegen der unten dargestellten Bodenanbindungsbaugruppe 1 ausgerichtet. Dementsprechend ist vorzugsweise eine Bodenanbindungsbaugruppe 1 in Flugrichtung und eine Bodenanbindungsbaugruppe 1 entgegen der Flugrichtung ausgerichtet. Dementsprechend sind die vorderen Befestigungselemente 2a der beiden Bodenanbindungsbaugruppen 1 einander zugewandt auf den Sitzschienen 5a,5b angeordnet. In diesem Ausführungsbeispiel kann daher in einfacher Weise eine Viereranordnung von Flugzeugsitzen 8 mit zwei entsprechenden Bodenanbindungsbaugruppen 1 realisiert werden, wobei jeweils zwei Flugzeugsitze 8 einander zugewandt sein können. Eine derartige Anordnung ist auch als Club Four bekannt. Mit entsprechenden Bodenanbindungsbaugruppen 1 kann ebenfalls in vorteilhafter Weise ein Tisch 7, in der Fig. 3 schematisch als zentrales Tischbein dargestellt, zwischen zwei zueinander gewandten Doppelsitzen angeordnet werden.

In weiteren Ausführungsbeispielen kann bei der Installation oder Montage der Bodenanbindungsbaugruppe 1 ein paralleler Versatz der Adapterplatten 3a,3b und/oder der vier Anschlusspunkte 4 zu den Sitzschienen 5a,5b eingestellt werden. Hierdurch kann der Flugzeugsitz 8 quer zur Flugrichtung des Flugzeugs an unterschiedlichen Positionen bei einer Befestigung an den gleichen Befestigungspunkten der Bodenstruktur angeordnet werden, was die Möglichkeiten der Kabinengestaltung erweitert. Die Einstellung der Position der Flugzeugsitze 8 mit ihrer Mittel- oder auch Symmetrielinie erfolgt vorteilhafterweise zwischen den Sitzschienen 5a,5b. Diese Einstellung erfordert typischerweise einen Montagevorgang und ist getrennt von einer möglichen translatorischen Bewegung des Flugzeugsitzes 8 zu betrachten, die beispielsweise von einem Passagier vorgenommen werden kann. Die Einstellung der Position des Flugzeugsitzes 8 quer zur Flugrichtung, beispielsweise in der Querachse B kann in einem möglichen Ausführungsbeispiel durch Auswahl der Länge der mechanischen Verbindung zwischen einer Adapterplatte 3a,3b und den Befestigungselementen 2a,2b erfolgen.

In Fig. 4 ist ein Flugzeugsitz 8 aus dem Stand der Technik mit einem Sitzgestell 9 dargestellt. Der Flugzeugsitz 8 aus dem Stand der Technik ist mit seinem Verformungsverhalten nach drei möglichen Crashfällen mit unterschiedlichen Beschleunigungsrichtungen C, D, E des Masseschwerpunkts eines sitzenden Passagiers, in Fig. 4 nicht gezeigt, dargestellt.

Das Sitzgestell 9 ist für die Aufnahme der Vordeformation entsprechend plastisch verformbar gestaltet. Dies gilt in besonderer Weise für den unteren Teil. Eine Vordeformation der Bodenstruktur des Flugzeugs ist in dieser seitlichen Darstellung nicht gezeigt. Das Sitzgestell 9 nimmt neben der Vordeformation auch die Belastungen im Crashfall mit hohen Beschleunigungen auf. Die Begrenzung der auf einen sitzenden Passagier einwirkenden Kräfte wird durch die nachgiebige Struktur des Sitzgestells 9 erreicht. Insgesamt stellt sich im unteren Bereich des Flugzeugsitzes 8 eine vergleichsweise große Deformation ein, die zu einer Drehung des Flugzeugsitzes 8 führt, wobei der Drehpunkt bezogen auf die Sitzfläche des Flugzeugsitzes 8 tief liegt, was zu großen Auslenkungen im oberen Bereich des Flugzeugsitzes 8 führt.

Die Auslenkung im Crashfall definiert die Bewegungsenveloppe des Flugzeugsitzes 8 und des sitzenden Passagiers, die von Gegenständen und/oder Objekten in der Kabine des Flugzeugs zur Vermeidung von Verletzungen freigehalten werden müssen. Nach dem Stand der Technik ergibt sich eine entsprechend große Bewegungsenveloppe. Eine steifere Ausführung des Sitzgestells 9 ist nach dem Stand der Technik durch die notwendige Aufnahme von Vorverformungen der Bodenstruktur des Flugzeugs durch das Sitzgestell 9 sowie durch die geforderte Kraftbegrenzung für den Passagier durch Aufnahme kinetischer Energie im Crashfall nicht möglich.

Alternativ besteht die Möglichkeit, den Freiraum um den Passagier so klein zu halten, dass der Weg zur Grenze des Freiraums, zum Beispiel ein Tisch 7 oder weiterer Flugzeugsitz 8, in einem Crashfall so kurz ist, dass keine signifikanten Relativgeschwindigkeiten zwischen Passagier und angrenzenden Teilen vor einer Kollision auftreten können. Dies führt allerdings zu erheblichen Einbußen im Komfort während des regulären Betriebs. Weiterhin kann dennoch eine Polsterung der entsprechenden Teile notwendig werden, was beispielsweise bei einer Tischoberfläche unpraktikabel ist.

In Fig. 5 sind drei Flugzeugsitze 8 mit einem Ausführungsbeispiel einer Bodenanbindungsbaugruppe 1 dargestellt, die die gleichen Beschleunigungen aus verschiedenen Crashfällen erfahren wie die Flugzeugsitze in Fig. 4. Die Bodenanbindungsbaugruppe 1 leitet Vorverformungen der Bodenstruktur des Flugzeugs nicht an den Sitzunterbau 10 weiter. Daher muss der Sitzunterbau 10 nicht in der Lage sein, Verformungen aufzunehmen, und kann sehr steif ausgeführt werden. Weiterhin wird die Verwendung von leichten und steifen Materialien mit geringem Verformungspotential, wie beispielsweise Kohlenstofffaser verstärkten Kunststoffen, ermöglicht, was zu einem leichteren Flugzeugsitz 8 führen kann. Die steife Ausführung des Sitzunterbaus 10 bietet für den Crashfall verschiedene Vorteile, beispielsweise kann eine Drehbewegung des Flugzeugsitzes 8 im Crashfall bei Beschleunigungsrichtungen in Bodenebene C, D weitgehend unterdrückt werden und/oder die Energieaufnahme bzw. Kraftbegrenzung gezielt oberhalb des Sitzunterbaus 10 erfolgen, was eine kleine Bewegungsenveloppe und eine geringere Strukturbelastung des Flugzeugsitzes 8 im Crashfall ermöglichen kann.

Für einen nach der Vordeformation erwarteten Crashfall mit hohen dynamischen Lasten aus den entsprechenden Beschleunigungen durch den Crash ist die insbesondere im Bereich des Kabinenbodens steife Flugzeugsitzstruktur vorteilhaft. Ein steifer Sitzunterbau 10, der an den Anschlusspunkten 4 an die Adapterplatte 3a,3b angeschlossen sein kann, erfährt keine Schädigung und/oder negative Beeinflussung durch die Vordeformation der Bodenstruktur. Auf diese Weise bleibt die Tragfähigkeit insbesondere für dynamische Lasten in einem Crashfall erhalten, so dass die Struktur dementsprechend präzise ausgelegt werden kann, was insbesondere zur Gewichtsreduktion genutzt werden kann. Die Lasten aus dem Crashfall können somit mit vernachlässigbaren Verformungen des Sitzunterbaus 10 bis beispielsweise zu einer Sitzfläche, Rückenlehne und/oder zu einem Gurtanschlagspunkt geleitet werden. Die Kraftbegrenzung zum Schutz des Passagiers kann oberhalb des Sitzunterbaus 10 erfolgen, beispielsweise im Übergangsbereich zu den eben genannten Sitzkomponenten, die einen direkten Kontakt zu einem Sitzenden aufweisen können. Die Kraftbegrenzung kann durch eine entsprechend hierfür in diesem Übergangsbereich vorgesehene und ausgelegte Einrichtung realisiert werden. Eine resultierende Rotationsbewegung des Sitzes kann vermieden werden.

Es kann eine funktionale Trennung im Flugzeugsitz 8 zwischen der Aufnahme von mechanischen Lasten, insbesondere im Crashfall, und der Aufnahme von Vorverformungen der Bodenstruktur erfolgen. Dadurch kann eine gezielte Auslegung der Kraftbegrenzung für einen Crashfall erfolgen.

Die Bodenanbindungsbaugruppe 1 kann in einem möglichen Ausführungsbeispiel mit einem Ausgleichscover abgedeckt werden, so dass sich eine ästhetisch hochwertige Fußbodengestaltung ergibt.

Eine bevorzugte Anwendung der Bodenanbindungsbaugruppe 1 für zwei Flugzeugsitze 8, beispielsweise auch in Form von Sesseln oder Polstermöbeln, liegt im VIP-Bereich oder auch Sonderausstattungsbereich für Flugzeuge. Weiterhin kann die Bodenanbindungsbaugruppe 1 vorteilhaft für Flugzeugsitze 8 in Kabinenabteilen eines Flugzeugs mit gehobenem Standard, sog. First Class Sitzen, eingesetzt werden.

In weiteren möglichen Ausführungsformen ist die mechanische Verbindung innerhalb der Bodenanbindungsbaugruppe 1 zwischen den Befestigungselementen 2a,2b und den Adapterplatten 3a,3b im Wesentlichen momentenfrei. Im Wesentlichen momentenfrei bedeutet, dass die Lagerung bzw. die mechanische Verbindung nicht dafür vorgesehen ist, mechanische Momente zu übertragen, so dass eine relative Rotation dieser mechanischen Verbindung möglich ist. Bei der relativen Rotation können jedoch geringe Momente übertragen werden, ohne dass dies einer im Wesentlichen momentenfreien Lagerung entgegensteht.

Die Befestigungspunkte können im Flugzeugboden an verschiedenen Stellen integriert sein, da die Bodenstruktur in diesem Ausführungsbeispiel keine Sitzschiene 5a,5b aufweist.

## Patentansprüche

1. Bodenanbindungsbaugruppe (1) zur mechanischen Anbindung von zwei Flugzeugsitzen (8) an eine Bodenstruktur eines Flugzeuges, welche vier Befestigungspunkte aufweist, wobei
- die Bodenanbindungsbaugruppe (1) an den vier Befestigungspunkten mit jeweils einem Befestigungselement (2a,2b) an der Bodenstruktur befestigbar ist, wobei
- die Bodenanbindungsbaugruppe (1) zwei Adapterplatten (3a, 3b) umfasst, wobei
- die zwei Adapterplatten (3a,3b) über ein Verbindungselement (6) miteinander verbunden sind, **dadurch gekennzeichnet, dass**
- die mechanische Verbindung zwischen mindestens einer der Adapterplatten (3) und mindestens einem der Befestigungselemente (2) in mindestens einer Achse derart verschiebbar oder verschiebbar und verdrehbar ist, dass die mechanische Verbindung in der Achse der Verschiebbarkeit keine wesentlichen Kräfte überträgt, und eine Relativbewegung zwischen Befestigungselement und Adapterplatte/n in dieser Achse möglich ist.

2. Bodenanbindungsbaugruppe (1) nach Anspruch 1, **dadurch gekennzeichnet, dass** durch das Verbindungselement (6) eine Verschiebbarkeit der beiden Adapterplatten (3a,3b) relativ zu einander parallel zu einer Querachse (B) von mindestens 10 mm bewirkbar ist.

3. Bodenanbindungsbaugruppe (1) nach Anspruch 1 oder 2, **dadurch gekennzeichnet, dass** die Verschiebbarkeit zwischen der Adapterplatte (3) und mindestens einem Befestigungselement (2) begrenzt ist.

4. Bodenanbindungsbaugruppe (1) nach einem der vorangehenden Ansprüche, **dadurch gekennzeichnet, dass** durch das Verbindungselement (6) die beiden Adapterplatten (3a,3b) gegeneinander um die Querachse (B) oder eine Parallele zu der Querachse (B) momentenfrei verbunden sind.

5. Bodenanbindungsbaugruppe (1) nach einem der vorangehenden Ansprüche, **dadurch gekennzeichnet, dass** auf zwei parallelen Achsen zu einer Längsachse (A) jeweils ein vorderes Befestigungselement (2a) und ein hinteres Befestigungselement (2b) angeordnet sind, wobei jeweils die vorderen Befestigungselemente (2a) auf einer parallelen Achse zu einer Querachse (B) und/oder jeweils die hinteren Befestigungselemente (2b) auf einer weiteren parallelen Achse zu einer Querachse (B) angeordnet sind, wobei die Längsachse (A) und die Querachse (B) rechtwinklig zueinander stehen.

6. Bodenanbindungsbaugruppe (1) nach einem der vorangehenden Ansprüche, **dadurch gekennzeichnet, dass** die vorderen Befestigungselemente (2a) parallel zu der Längsachse (A) mindestens jeweils 20 mm in beide Richtungen verschiebbar sind, parallel zu der Querachse (B) mindestens jeweils 3 mm in beide Richtungen verschiebbar sind, und parallel zu einer Hochachse (C) fest sind, wobei die hinteren Befestigungselemente (2b) parallel zu der Längsachse (A) fest sind, parallel zu der Querachse (B) fest sind, und parallel zu der Hochachse (C) fest sind.

7. Bodenanbindungsbaugruppe (1) nach einem der vorangehenden Ansprüche, **dadurch gekennzeichnet, dass** mindestens eine Verbindung von der Adapterplatte (3a,3b) zu einem Befestigungselement (2a,2b) und/oder das Verbindungselement (6) zwischen den Adapterplatten einen Verformungsbereich aufweist, der dafür vorgesehen ist, in mindestens einer Richtung eine Verschiebbarkeit durch eine plastische Deformation zu ermöglichen.

8. Bodenanbindungsbaugruppe (1) nach einem der vorangehenden Ansprüche, **dadurch gekennzeichnet, dass** die mechanische Verbindung zwischen einer Adapterplatte (3a,3b) und mindestens einem Befestigungselement (2a,2b) oder das Verbindungselement (6) zwischen den Adapterplatten (3a,3b) ein Elastomerlager aufweist und/oder eine Lagerung mit Gleitsitz aufweist.

9. Bodenanbindungsbaugruppe (1) nach einem der vorangehenden Ansprüche, **dadurch gekennzeichnet, dass** die Adapterplatten (3a,3b) der Bodenanbindungsbaugruppe (1) bis zu einer Auslenkung der Befestigungspunkte von 200 mm aus ihrer Ausgangslage deformationsfrei lagerbar sind.

10. Bodenanbindungsbaugruppe (1) nach einem der vorangehenden Ansprüche, **dadurch gekennzeichnet, dass** jeweils zwei der Befestigungselemente (2a,2b) an zwei Befestigungspunkten auf einer Sitzschiene (5a,5b) befestigbar sind, wobei die Bodenanbindungsbaugruppe (1) derart lagerbar ist, dass eine Drehung einer Sitzschiene (5a,5b) um einen innerhalb der Sitzschiene (5a,5b) und im Umkreis von 1 m um den geometrischen Mittelpunkt der Bodenanbindungsbaugruppe (1) liegenden Drehpunkt um mindestens 10° keine irreversible Deformation der Adapterplatten (3a,3b) hervorruft.

11. Bodenanbindungsbaugruppe (1) nach einem der vorangehenden Ansprüche, **dadurch gekennzeichnet, dass** an mindestens einer der Adapterplatten (3a, 3b) ein Anschlusspunkt (4) für einen Sitzunterbau (10) vorgesehen ist.

12. Bodenanbindungsbaugruppe (1) nach einem der vorangehenden Ansprüche, **dadurch gekennzeichnet, dass** auf der Bodenanbindungsbaugruppe (1) mindestens ein Sitzunterbau (10) translatorisch und/oder rotatorisch in einer Bodenebene bewegbar ist.

13. Bodenanbindungsbaugruppe (1) nach einem der Ansprüche 1 bis 11, **dadurch gekennzeichnet, dass** eine Adapterplatte (3a,3b) zusammen mit einem Sitzunterbau (10) ein Integralbauteil ist.

14. Zusammenbau eines Flugzeugsitzes (8) mit einer Bodenanbindungsbaugruppe (1) nach einem der vorangehenden Ansprüche.

## Claims

1. Floor attachment assembly (1) for mechanically connecting two aircraft seats (8) to a floor structure of an aircraft, which assembly comprises four attachment points,
- it being possible to attach the floor attachment assembly (1) to the floor structure by means of one attachment element (2a, 2b) in each case at the four attachment points,
- the floor attachment assembly (1) comprising two adapter plates (3a, 3b),
- the two adapter plates (3a, 3b) being interconnected by means of a connection element (6),
**characterised in that**
- the mechanical connection between at least one of the adapter plates (3) and at least one of the attachment elements (2) is movable or movable and rotatable along at least one axis in such a way that the mechanical connection does not transmit any significant forces along the axis of the movability, and relative movement between the attachment element and the adapter plate/s is possible along this axis.

2. Floor attachment assembly (1) according to claim 1, **characterised in that**, by means of the connection element (6), the two adapter plates (3a, 3b) can be moved by at least 10 mm relative to one another in parallel with a transverse axis (B) .

3. Floor attachment assembly (1) according to either claim 1 or claim 2, **characterised in that** the movability between the adapter plate (3) and at least one attachment element (2) is limited.

4. Floor attachment assembly (1) according to any of the preceding claims, **characterised in that**, by means of the connection element (6), the two adapter plates (3a, 3b) are connected to one another in a torque-free manner on the transverse axis (B) or a line that is parallel to the transverse axis (B).

5. Floor attachment assembly (1) according to any of the preceding claims, **characterised in that** a front attachment element (2a) and a rear attachment element (2b) are in each case arranged on two axes that are parallel to a longitudinal axis (A), the front attachment elements (2a) being arranged in each case on an axis that is parallel to a transverse axis (B) and/or the rear attachment elements (2b) being arranged in each case on a further axis that is parallel to a transverse axis (B), the longitudinal axis (A) and the transverse axis (B) being at right angles to one another.

6. Floor attachment assembly (1) according to any of the preceding claims, **characterised in that** the front attachment elements (2a) can each be moved by at least 20 mm in both directions in parallel with the longitudinal axis (A), can each be moved by at least 3 mm in both directions in parallel with the transverse axis (B) and are fixed in parallel with a vertical axis (C), the rear attachment elements (2b) being fixed in parallel with the longitudinal axis (A), being fixed in parallel with the transverse axis (B) and being fixed in parallel with the vertical axis (C).

7. Floor attachment assembly (1) according to any of the preceding claims, **characterised in that** at least one connection of the adapter plate (3a, 3b) to an attachment element (2a, 2b) and/or the connection element (6) between the adapter plates has a deformation region that is provided to make movement possible in at least one direction by plastic deformation.

8. Floor attachment assembly (1) according to any of the preceding claims, **characterised in that** the mechanical connection between one adapter plate (3a, 3b) and at least one attachment element (2a, 2b) or the connection element (6) between the adapter plates (3a, 3b) comprises an elastomer bearing and/or comprises a bearing having a sliding fit.

9. Floor attachment assembly (1) according to any of the preceding claims, **characterised in that** the adapter plates (3a, 3b) of the floor attachment assembly (1) can be mounted such that the attachment points can deflect by up to 200 mm out of their original position without deformation.

10. Floor attachment assembly (1) according to any of the preceding claims, **characterised in that** in each case, two of the attachment elements (2a, 2b) can be attached at two attachment points to a seat rail (5a, 5b), the floor attachment assembly (1) being mounted such that rotation of a seat rail (5a, 5b) by at least 10° about a point of rotation positioned within the seat rail (5a, 5b) and within a 1 m radius of the geometric central point of the floor attachment assembly (1) does not bring about irreversible deformation of the adapter plates (3a, 3b).

11. Floor attachment assembly (1) according to any of the preceding claims, **characterised in that** a connection point (4) for a seat substructure (10) is provided on at least one of the adapter plates (3a, 3b).

12. Floor attachment assembly (1) according to any of the preceding claims, **characterised in that** at least one seat substructure (10) can be moved in translation and/or in rotation in a floor plane on the floor attachment assembly (1) .

13. Floor attachment assembly (1) according to any of claims 1 to 11, **characterised in that** an adapter plate (3a, 3b) is an integral component, together with a seat substructure (10).

14. Assembly of an aircraft seat (8) with a floor attachment assembly (1) according to any of the preceding claims.

## Revendications

1. Ensemble de fixation au plancher (1) destiné à la fixation mécanique de deux sièges d'avion (8) à une structure de plancher d'un avion, qui comporte quatre points de fixation,
dans lequel
- l'ensemble de fixation au plancher (1) peut être fixé à la structure de plancher aux quatre points de fixation au moyen de respectivement un élément de fixation (2a, 2b),
dans lequel
- l'ensemble de fixation au plancher (1) comprend deux plaques d'adaptation (3a, 3b), dans lequel
- les deux plaques d'adaptation (3a, 3b) sont reliées entre elles par un élément de liaison (6),
**caractérisé en ce que**
- la liaison mécanique entre au moins une des plaques d'adaptation (3) et au moins un des éléments de fixation (2) est déplaçable ou déplaçable et rotative dans au moins un axe de telle manière que la liaison mécanique ne transmet pas de forces substantielles dans l'axe du déplacement possible, et un mouvement relatif entre l'élément de fixation et la/les plaque(s) d'adaptation est possible dans cet axe.

2. Ensemble de fixation au plancher (1) selon la revendication 1, **caractérisé en ce que** l'élément de liaison (6) permet d'obtenir une capacité de déplacement d'au moins 10 mm des deux plaques d'adaptation (3a, 3b) l'une par rapport à l'autre parallèlement à un axe transversal (B).

3. Ensemble de fixation au plancher (1) selon la revendication 1 ou 2, **caractérisé en ce que** la capacité de déplacement entre la plaque d'adaptation (3) et au moins un élément de fixation (2) est limitée.

4. Ensemble de fixation au plancher (1) selon l'une des revendications précédentes, **caractérisé en ce que** l'élément de liaison (6) permet de relier les deux plaques d'adaptation (3a, 3b) sans couple l'une par rapport à l'autre autour de l'axe transversal (B) ou d'une parallèle à l'axe transversal (B).

5. Ensemble de fixation au plancher (1) selon l'une des revendications précédentes, **caractérisé en ce qu'**un élément de fixation (2a) avant et un élément de fixation (2b) arrière sont disposés respectivement sur deux axes parallèles à un axe longitudinal (A), les éléments de fixation (2a) avant étant disposés respectivement sur un axe parallèle à un axe transversal (B) et/ou les éléments de fixation (2b) arrière étant disposés respectivement sur un autre axe parallèle à un axe transversal (B), l'axe longitudinal (A) et l'axe transversal (B) formant un angle droit l'un avec l'autre.

6. Ensemble de fixation au plancher (1) selon l'une des revendications précédentes, **caractérisé en ce que** les éléments de fixation (2a) avant sont déplaçables d'au moins respectivement 20 mm dans les deux directions parallèlement à l'axe longitudinal (A), déplaçables d'au moins respectivement 3 mm dans les deux directions parallèlement à l'axe transversal (B) et fixes parallèlement à un axe vertical (C), les éléments de fixation (2b) arrière étant fixes parallèlement à l'axe longitudinal (A), fixes parallèlement à l'axe transversal (B) et fixes parallèlement à l'axe vertical (C).

7. Ensemble de fixation au plancher (1) selon l'une des revendications précédentes, **caractérisé en ce qu'**au moins une liaison de la plaque d'adaptation (3a, 3b) à un élément de fixation (2a, 2b) et/ou l'élément de liaison (6) entre les plaques d'adaptation comporte une zone de déformation, qui est prévue pour permettre une capacité de déplacement dans au moins une direction par une déformation plastique.

8. Ensemble de fixation au plancher (1) selon l'une des revendications précédentes, **caractérisé en ce que** la liaison mécanique entre une plaque d'adaptation (3a, 3b) et au moins un élément de fixation (2a, 2b) ou l'élément de liaison (6) entre les plaques d'adaptation (3a, 3b) comporte un support en élastomère et/ou un support avec ajustement glissant.

9. Ensemble de fixation au plancher (1) selon l'une des revendications précédentes, **caractérisé en ce que** les plaques d'adaptation (3a, 3b) de l'ensemble de fixation au plancher (1) peuvent être supportées sans déformation jusqu'à un déport des points de fixation de 200 mm hors de leur position initiale.

10. Ensemble de fixation au plancher (1) selon l'une des revendications précédentes, **caractérisé en ce que** deux des éléments de fixation (2a, 2b) peuvent être respectivement fixés en deux points de fixation sur un rail de siège (5a, 5b), l'ensemble de fixation au plancher (1) pouvant être supporté de telle manière qu'une rotation d'au moins 10° d'un rail de siège (5a, 5b) autour d'un point de pivotement se trouvant dans le rail de siège (5a, 5b) et dans un rayon d'1 m autour du centre géométrique de l'ensemble de fixation au plancher (1) n'entraîne pas de déformation irréversible des plaques d'adaptation (3a, 3b).

11. Ensemble de fixation au plancher (1) selon l'une des revendications précédentes, **caractérisé en ce qu'**un point de raccordement (4) pour une base de siège (10) est prévu sur au moins une des plaques d'adaptation (3a, 3b).

12. Ensemble de fixation au plancher (1) selon l'une des revendications précédentes, **caractérisé en ce que**, sur l'ensemble de fixation au plancher (1), au moins une base de siège (10) est mobile en translation et/ou en rotation dans un plan de plancher.

13. Ensemble de fixation au plancher (1) selon l'une des revendications 1 à 11, **caractérisé en ce qu'**une plaque d'adaptation (3a, 3b) est un élément d'un seul tenant avec une base de siège (10).

14. Assemblage d'un siège d'avion (8) et d'un ensemble de fixation au plancher (1) selon l'une des revendications précédentes.
